(19) Europäisches Patentamt
European Patent Office
Office européen des brevets

(11) **EP 4 181 335 B1**

(12) **EUROPÄISCHE PATENTSCHRIFT**

(45) Veröffentlichungstag und Bekanntmachung des Hinweises auf die Patenterteilung:
**18.02.2026   Patentblatt 2026/08**

(21) Anmeldenummer: **21208292.9**

(22) Anmeldetag: **15.11.2021**

(51) Internationale Patentklassifikation (IPC):
*H02G 1/12* *(2006.01)*

(52) Gemeinsame Patentklassifikation (CPC):
**H02G 1/1285; H02G 1/1297;** H02G 1/1265

(54) **VORRICHTUNG UND VERWENDUNG DER VORRICHTUNG ZUM ABISOLIEREN EINES KABELS**

DEVICE AND USE OF THE DEVICE FOR INSULATING A CABLE

DISPOSITIF ET UTILISATION DU DISPOSITIF PERMETTANT DE DÉNUDER UN CÂBLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Validierungsstaaten:
**MA MD TN**

(43) Veröffentlichungstag der Anmeldung:
**17.05.2023   Patentblatt 2023/20**

(73) Patentinhaber: **Komax Holding AG**
**6036 Dierikon (CH)**

(72) Erfinder:
• **Khu, Peter**
  **1210 Wien (AT)**
• **Zelzer, Andreas**
  **94513 Schönberg (DE)**

(74) Vertreter: **Patentanwälte Pinter & Weiss OG**
**Prinz-Eugen-Straße 70**
**1040 Wien (AT)**

(56) Entgegenhaltungen:
WO-A1-2019/243193      DE-B1- 2 158 888
FR-A1- 2 373 131       JP-A- H09 308 038

**Beschreibung**

Die Erfindung betrifft eine Vorrichtung zum Abisolieren eines Kabels mit einem äußeren Schutzmantel, wobei die Vorrichtung eine Stützrollenanordnung und eine Arbeitsradanordnung aufweist, wobei die Stützrollenanordnung an einer um eine Rotationsachse drehbare Rotationsbasis der Vorrichtung angeordnet ist und die Arbeitsradanordnung an einer Arbeitsradführung angeordnet ist, wobei die Rotationsbasis und die Arbeitsradführung über zumindest eine Führung miteinander verbunden sind und die Arbeitsradführung in einer Quer zur Rotationsachse verlaufenden Führungsrichtung relativ zur Rotationsbasis verschiebbar ist, wobei die Stützrollenanordnung zumindest zwei jeweils um eine Stützrollenachse drehbar an der Rotationsbasis gelagerte Stützrollen umfasst und die Arbeitsradanordnung ein um eine Walzradachse drehbar an der Arbeitsradführung gelagertes Walzrad umfasst und wobei um die Rotationsachse herum und zwischen den zumindest zwei Stützrollen und dem Walzrad ein Klemmbereich ausgebildet ist, der durch das Verschieben der Arbeitsradführung in Führungsrichtung relativ zur Rotationsbasis je nach Verschieberichtung vergrößerbar und verkleinerbar ist. Die Erfindung betrifft auch eine Verwendung dieser Vorrichtung zum Abisolieren eines Kabels mit einem äußeren Schutzmantel, der durch das Abisolieren zu entfernen ist.

Geschirmte Kabel bestehen im Wesentlichen aus einer geschirmten Leitungsanordnung, die einen oder mehrere Leiter aufweist, zumindest einer Abschirmlage, die die Leitungsanordnung umgibt, und einen äußeren Schutzmantel. Die Abschirmlage und der Schutzmantel sind konzentrisch um die Leitungsanordnung angeordnet, wobei die Abschirmlage die Leitungsanordnung gegen elektrische oder magnetische Felder abschirmt und der um die Abschirmlage angeordnete Schutzmantel insbesondere einen mechanischen Schutz gegen Außeneinflüsse und eine elektrische Isolation der Leitungsanordnung bietet.

Die Abschirmlage des geschirmten Kabels besteht oftmals aus einem Schirmgeflecht und einer Schirmfolie, die das Schirmgeflecht umgibt. Der Schutzmantel umgibt wiederum die Schirmfolie. Eine zusätzliche Problematik bei Abisolieren stellt die Haftreibung zwischen Schutzmantel und Schirmfolie dar. Mitunter sind Schutzmantel und Schirmfolie sogar miteinander verklebt oder verschweißt. Bei solchen Kabeln muss man zum Abisolieren zwingend den Schutzmantel und die Schirmfolie in einem Arbeitsgang bearbeiten, da der Schutzmantel alleine nicht entfernt werden kann. In solchen Situationen ist das Abisolieren besonders diffizil, weil dabei ein Teil der Abschirmlage entfernt werden muss, das Schirmgeflecht der Abschirmlage aber nicht beschädigt werden darf.

Zum Anschließen geschirmter Kabel ist es erforderlich, den Schutzmantel in einem gewissen Abstand vom Kabelende rund um das Kabel zu durchtrennen und dann von der Abschirmlage abzuziehen, gegebenenfalls auch mit einer Schirmfolie. Dieser Vorgang wird auch als Abisolieren bezeichnet. Dabei muss jedoch die Abschirmlage oder zumindest der benötigte Teil der Abschirmlage intakt bleiben, da ansonsten nach dem Anschließen des Kabels eine funktionierende Abschirmung nicht gewährleistet ist oder ein Anschließen der Abschirmung, üblicherweise an ein elektrisches Bezugspotential, überhaupt nicht möglich ist.

Die Abschirmlage besteht im Allgemeinen aus einem äußerst dünnen und empfindlichen Material, beispielsweise aus einer dünnen Aluminiumfolie, einer metallisch beschichteten Kunststofffolie (Schirmfolie), einem filigranen Drahtgeflecht oder aus mehreren solchen Schichten. Der Schutzmantel hingegen muss aus einem widerstandsfähigen Material bestehen, beispielsweise aus widerstandsfähigen Kunststoffen, wie etwa PUR, PVC, Silikon, etc., und muss entsprechende Dicken aufweisen. Der Schutzmantel ist gegenüber der Abschirmlage deutlich dicker.

Das Abisolieren geschirmter Kabel erfolgt daher meist händisch und erfordert Fingerspitzengefühl und Erfahrung. Auch bekannte mechanische Hilfsmittel, wie etwa Abisolierzangen oder Drehschneider erfordern eine sehr sorgfältige und erfahrene Handhabung, da auch mit ihnen die Abschirmung leicht zerstört werden kann. Die DE 21 58 888 A1 beschreibt beispielsweise eine Abisolierzange, mit der das Kabel händisch der längs nach aufgeschnitten wird. Um die Zange entlang des Kabels zu bewegen, wird ein Rad mit radial abstehenden Spitzen verwendet, die sich oberflächlich in den Kabelmantel eindrücken. Auch die FR 2 373 131 A zeigt ein Abisolieren der längs nach, wobei auch darin ein Rad mit abstehenden Spitzen verwendet wird, um das Kabel in Richtung eines Schneidmessers zu bewegen. In beiden Fällen haben die Räder mit den radial abstehenden Spitzen mit dem Vorgang des Abisolierens selbst, also mit dem Schneiden des Kabelmantels, nichts zu tun.

Besonders das Montieren zahlreicher geschirmter Kabelanschlüsse, wie das etwa in der industriellen Produktion von Elektroautos erforderlich ist, kann daher ein zeitraubendes Unterfangen sein.

EP 2 693 581 A1 offenbart eine Vorrichtung zum Abisolieren geschirmter Kabel mit einer um das Kabel drehbaren Klingenanordnung, deren Zustellung zur Einbringung eines Schnittes in den Schutzmantel veränderbar ist. Eine elektronische Detektionsvorrichtung ermittelt, wenn die Klingen mit der Abschirmung in Kontakt gelangen, allerdings ist es in der Regel zu spät, wenn die Detektionsvorrichtung anschlägt, da der Schirm, respektive der Leiter bereits eingeschnitten bzw. verletzt wurde.

WO 2019/243193 A1 zeigt eine Vorrichtung zum Abisolieren eines geschirmten Kabels mit einer Stützrollenanordnung, mit einer Mehrzahl an Stützrädern, und einer Arbeitsradanordnung mit einem Walzrad. Das Kabel wird im Einsatz der Vorrichtung zwischen der Stützrollenanordnung und der Arbeitsradanordnung eingeklemmt und beide Anordnungen rotieren um das feststehende Kabel. Die Arbeitsradanordnung ist quer zur Drehachse verschiebbar, sodass das Walzrad durch die Rotation in den äußeren Schutzmantel des Kabels eindringen kann und diesen entlang des Umfangs durchtrennen kann. Zusätzlich kann die Arbeitsradanordnung auch ein Schneiderad oder eine Schneide umfassen, die das Durchtrennen des Schutzmantels unterstützen. Nachteilig an dieser Vorrichtung ist, dass es durch das Walzrad bei weicheren Kabeln zu einer Verformung oder gar Beschädigung der empfindlichen Abschirmlage, oder eines Teiles davon, kommen kann. Das wurde insbesondere bei Kabeln festgestellt, deren Abschirmlage von einer Abschirmfolie umgeben ist, die beim Abisolieren ebenfalls durchtrennt werden muss. Zum Durchtrennen einer solchen Abschirmfolie müssen vom Walkrad entsprechende Druckkräfte auf die Abschirmfolie aufgebracht werden, was die darunterliegenden Teile der Abschirmlage, beispielsweise ein Schirmgeflecht, verformen oder beschädigen kann.

Es ist die Aufgabe der gegenständlichen Erfindung, Vorrichtungen und Verfahren bereitzustellen, mit denen das Abisolieren von Kabeln, insbesondere von geschirmten Kabeln, einfach und sicher durchgeführt werden kann, ohne eine Abschirmlage durch das Abisolieren nachteilig, insbesondere durch Verformung oder Beschädigung, zu beeinflussen.

Diese Aufgabe wird erfindungsgemäß durch eine Vorrichtung der eingangs genannten Art gelöst, bei der am Walzrad an einer radial äußeren Walzkontur über den Umfang verteilt einer Mehrzahl von Perforationselementen angeordnet sind, die radial um eine Länge von der Walzkontur abstehen. Durch das Walzrad wird einerseits der Schutzmantel, der üblicherweise aus einem Kunststoff gefertigt ist, effektiv durchtrennt, indem das am Kabelmantel entlang eines Schnittbereichs abrollende Walzrad das Material des Kabelmantels solange zermürbt, bis schließlich der Kabelmantel dem Druck des Walzrades nicht mehr standhält und dieses in den Kabelmantel radial eindringen kann und dabei durchtrennt. In eine härtere und festere Abschirmlage im Kabel kann das Walzrad hingegen nicht eindringen und diese bleibt daher unbeschädigt. Andererseits sorgen die radial abstehenden Perforationselemente dafür, dass der lokale Druck des Walzrades auf die Abschirmlage, insbesondere auf ein Schirmgeflecht einer Abschirmlage, nieder bleibt, wodurch eine allfällige nachteilige Verformung oder gar Beschädigung der Abschirmlage verhindert wird. Außerdem sorgen die Perforationselemente auch dafür, dass eine allfällig vorhandene Schirmfolie perforiert wird, die dann einfach entlang der Perforation vom Kabel entfernt werden kann. Die Perforationselemente dringen dabei nur gering in ein darunter liegendes Schirmgeflecht ein, sodass diese dabei nicht beschädigt wird. Die hierfür benötigte Andruckkraft des Walzrades lässt sich auf einfache Weise durch entsprechende Stellmittel erzeugen und steuern, beispielsweise durch Federn oder entsprechende Stellantriebe.

In vorteilhafter Weise kann die Länge und/oder Position der Führung etwa mittels Begrenzungselementen und/oder Stellschrauben auch verstellbar sein. Dadurch lässt sich die Vorrichtung auf einfache Weise an unterschiedliche Kabelstärken anpassen.

Um das Durchtrennen des Schutzmantels des Kabels zu unterstützen umfasst die Arbeitsradanordnung zusätzlich ein um eine Schneideradachse drehbar an der Arbeitsradführung gelagertes Schneiderad mit einer radial außen liegenden Schneidekante oder eine an der Arbeitsradführung angeordnete Schneide. In diesem Fall ist der Klemmbereich zwischen den zumindest zwei Stützrollen, dem Walzrad und dem Schneiderad ausgebildet ist. Das Schneiderad schneidet aktiv in den Schutzmantel ein und erleichtert damit das radiale Eindringen des Walzrades in den Schutzmantel.

Hierbei ist es vorteilhaft, wenn die radial außen liegende Walzkontur des Walzrades näher an der Rotationsachse angeordnet ist, als der radial äußere Rand der Schneidekante des Schneiderades. Damit kann erreicht werden, dass die Schneidekante des Schneiderades während dem Abisoliervorgang nicht mit der Abschirmlage, insbesondere mit einem Schirmgeflecht der Abschirmlage, in Berührung kommt und diese beschädigen könnte.

Damit die Perforationselemente eine Schirmfolie zwar sicher perforieren, aber nicht zu weit in ein Schirmgeflecht einer Abschirmlage eindringen ist vorzugsweise vorgesehen, dass die Länge der Perforationselemente zwischen 0,02mm und 0,5mm beträgt.

Um das Walzrad für verschiedene Kabel verwenden zu können und dabei möglichst gleichmäßige Perforationsmuster entlang des Umfangs zu erzielen, ist vorteilhaft vorgesehen, dass zwei in Umfangsrichtung benachbarte Perforationselemente in Umfangsrichtung durch ein Perforationsinkrement voneinander beabstandet angeordnet sind, wobei das Perforationsinkrement in einem Bereich $\left[ \frac{U}{n}, \frac{U}{n+1} \right]$ liegt, wobei n eine natürlich Zahl zwischen 2 und 15, vorzugsweise zwischen 2 und 10, ist und U eine Umfangslänge auf einem Radius um die Rotationsachse angibt, an dem die Perforationselemente bei Verwendung der Vorrichtung Perforationen erzeugen sollen. Das Perforationsinkrement wird vorzugsweise möglichst mittig in diesem Bereich gewählt.

Wenn die Arbeitsradführung bezogen auf die Rotationsachse eine exzentrische Gewichtsverteilung aufweist, wodurch eine Zentrifugalkraft auf die Arbeitsradführung wirkt, wenn die Rotationsbasis mit der daran über die Führungen angeordneten Arbeitsradführung um die Rotationsachse rotiert, kann die benötigte Andruckkraft zum Durchtrennen des Schutzmantels auf einfache Weise von der wirkenden Zentrifugalkraft bewirkt werden. Das lässt sich einfach und sicher durch die Gewichtsverteilung und/oder die Rotationsgeschwindigkeit beeinflussen und steuern. In diesem Fall sind keinerlei Stellmittel, wie Spannfedern oder Stellantriebe, zur Erzeugung der Andruckkraft erforderlich.

Die Vorrichtung wird zum Abisolieren eines Kabels mit einem äußeren Schutzmantel verwendet, wobei das Ende des abzuisolierenden Kabels unter Aufbringung einer Andruckkraft im Klemmbereich zwischen dem Walzrad der Arbeitsradanordnung und den zumindest zwei Stützrollen der Stützrollenanordnung eingeklemmt wird, wobei die Einheit aus Arbeitsradanordnung und Stützrollenanordnung durch Rotation der Rotationsbasis um das Kabel herumrotiert und das Walzrad und die zumindest zwei Stützrollen dabei am Kabel abrollen und die Arbeitsradführung mit der Arbeitsradanordnung dabei in Führungsrichtung in Richtung zur Rotationsachse verschoben wird, sodass das Walzrad in einem von der Walzkontur erzeugten Schnittbereich radial in den Schutzmantel des Kabels eindringt und dabei den Schutzmantel des Kabels entlang des Umfangs durchtrennt. Das Verschieben der Arbeitsradführung mit der Arbeitsradanordnung erfolgt dabei vorteilhafterweise durch die Andruckkraft, die vorzugsweise durch eine wirkende Fliehkraft hervorgerufen wird.

Bei Abisolieren ist vorzugsweise vorgesehen, dass das Walzrad radial in den Schutzmantel des Kabels eindringt bis die Walzkontur eine Abschirmlage im Kabel erreicht. Wenn die Abschirmlage ein Schirmgeflecht und eine das Schirmgeflecht umgebende Schirmfolie umfasst, dringt das Walzrad bei Abisolieren vorzugsweise so weit radial in das Kabel ein bis die Walzkontur die Schirmfolie im Kabel erreicht, wodurch die Schirmfolie durch die Perforationselemente des Walzrades über den Umfang perforiert wird. Auf diese Weise kann ein Abisolieren und gleichzeitig ein Perforieren der Schirmfolie erzielt werden, die dann mit dem abgetrennten Schutzmantel einfach entlang der Perforation abgezogen werden kann.

Um den Abisoliervorgang einfach überwachen zu können, kann vorgesehen sein, das Schirmgeflecht des abzuisolierenden Kabels mittels eines elektrischen Testkontakts elektrisch zu kontaktieren, wobei der Testkontakt elektrisch mit dem Walzrad verbunden wird und mittels eines Messgeräts und einer elektrischen Durchgangsprüfung geprüft wird, ob das Walzrad während des Abisolierens in Kontakt mit dem Schirmgeflecht gerät und im Falle eines festgestellten Kontakts der Abisoliervorgang beendet wird. Zur elektrischen Durchgangsprüfung kann beispielsweise eine benötigte elektrische Spannung zwischen den Testkontakt und dem Walzrad angelegt werden.

Zur Qualitätssicherung des Abisoliervorganges kann auch vorgesehen sein, dass das Schirmgeflecht des abzuisolierenden Kabels mittels eines elektrischen Testkontakts elektrisch kontaktiert wird und der Testkontakt elektrisch mit dem Schneiderad oder der Schneide verbunden wird und mittels eines Messgeräts und einer elektrischen Durchgangsprüfung geprüft wird, ob das Schneiderad oder die Schneide während des Abisolierens in Kontakt mit dem Schirmgeflecht gerät. Auf diese Weise können Kabel ausgeschieden werden, bei denen während des Abisolierens das Schneiderad oder die Schneide in Kontakt mit dem Schirmgeflecht waren.

Die gegenständliche Erfindung wird nachfolgend unter Bezugnahme auf die Figuren 1 bis 13 näher erläutert, die beispielhaft, schematisch und nicht einschränkend vorteilhafte Ausgestaltungen der Erfindung zeigen. Dabei zeigt

Fig.1 eine beispielhafte Ausführungsform der erfindungsgemäßen Vorrichtung zum Abisolieren von Kabeln schematisch in einer Vorderansicht,

Fig. 2 die in Fig. 1 dargestellte Vorrichtung in einer Schnittansicht entlang der Linie II-II in Fig. 1,

Fig. 3 ein schematisch im Querschnitt dargestelltes Kabel, das zum Abisolieren in der erfindungsgemäßen Vorrichtung angeordnet ist und die am Kabel angreifende Arbeitsrad- und Stützrollenanordnung,

Fig. 4 einen typischen Querschnitt eines abzuisolierenden Kabels mit einem Schirmgeflecht und einer Schirmfolie,

Fig. 5 bis 8 verschiedene Ausführungen eines Walzrades mit Perforationselementen,

Fig. 9 ein unregelmäßiges Perforationsmuster,

Fig. 10 ein regelmäßiges Perforationsmuster,

Fig. 11 eine elektrische Durchgangsprüfung zur Qualitätssicherung des Abisoliervorganges,

Fig. 12 eine Vorrichtung mit einem Walzrad als Arbeitsradanordnung und

Fig. 13 eine Vorrichtung mit einem Walzrad und einer Schneide als Arbeitsradanordnung.

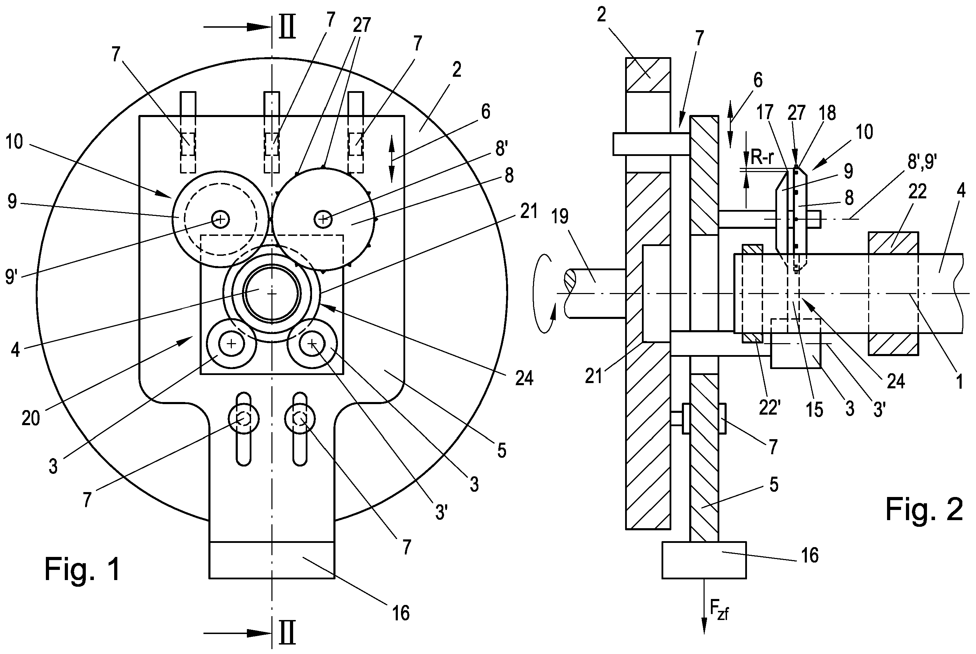

Die in Fig. 1 und 2 beispielhaft dargestellte Vorrichtung zum Abisolieren eines Kabels 4 weist eine um eine Rotationsachse 1 drehbare, vorzugsweise plattenförmig ausgebildete, Rotationsbasis 2 auf, an deren Vorderseite eine Stützrollenanordnung 20 bestehend aus einer Mehrzahl von Stützrollen 3, beispielsweise einem Paar Stützrollen 3 wie im dargestellten Ausführungsbeispiel, angeordnet ist. Jede Stützrollen 3 ist um eine Stützrollenachse 3' drehbar gelagert an der Rotationsbasis 2 angeordnet. In Verwendung der Vorrichtung rotiert die Rotationsbasis 2 zur Rotation um die Rotationsachse 1. Die Rotationsbasis 2 wird hierfür zur Rotation um die Rotationsachse 1 in vorgegebener Drehrichtung angetrieben.

Die Rotationsbasis 2 kann beispielsweise über eine Welle 19 mit einem Antrieb (nicht dargestellt), beispielsweise ein Motor oder eine Kombination aus einem Motor und einem Getriebe, verbunden sein, der die Rotationsbasis 2 antreibt.

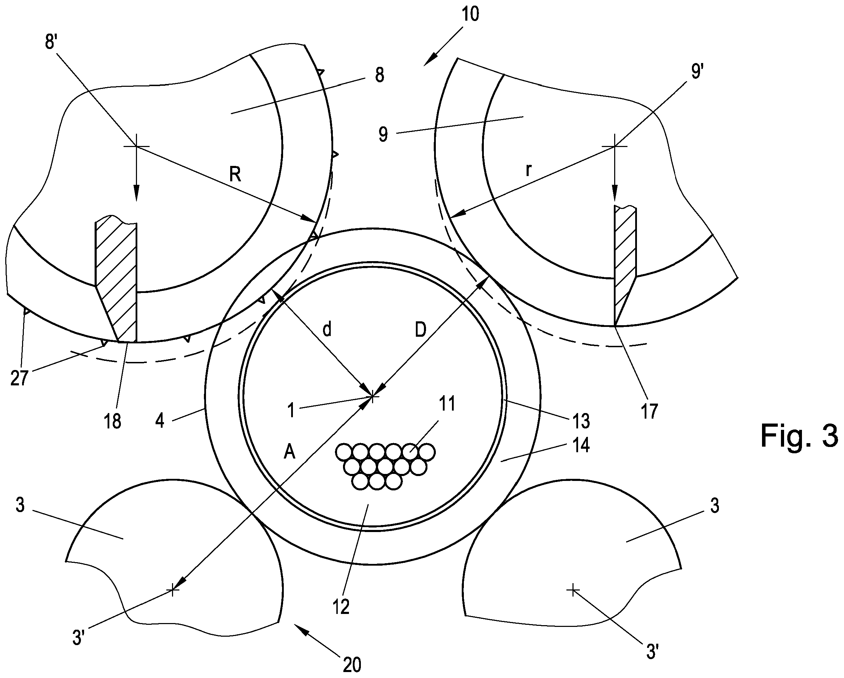

Die Stützrollenachsen 3' der Stützrollen 3 sind vorzugsweise parallel zur Rotationsachse 1 der Rotationsbasis 2 angeordnet und weisen einen Radialabstand A (z.B. Fig.3) zur Rotationsachse 1 auf, der in Bezug auf den Durchmesser eines abzuisolierenden Kabels 4 so gewählt ist, dass das auf den Stützrollen 3 angeordnete Kabel 4 mittig auf die Rotationsachse 1 ausgerichtet ist, also die Längsachse des Kabels 4 mit der Rotationsachse 1 zusammenfällt. Die Durchmesser der Stützrollen 3 und deren Radialabstände A müssen aber nicht zwingend gleich sein. Gegebenenfalls kann der Radialabstand A der Stützrollen 3 auf der Rotationsbasis 2 verstellt werden, um die Vorrichtung auf Kabel 4 unterschiedlicher Durchmesser einstellen zu können. Es kann aber zur Anpassung an unterschiedliche Kabeln 4 auch die Rotationsbasis 2 gewechselt werden. Während des Abisolierens des Kabels 4 bleibt die Position der Stützrollen 3 jedoch in Bezug auf die rotierende Rotationsbasis 2 unverändert, wobei sich die Stützrollen 3 mit der rotierenden Rotationsbasis 2 um das Kabel 4 herum bewegen und auf dessen äußeren Mantel abrollen.

An der Rotationsbasis 2 ist eine, vorzugsweise plattenförmig ausgebildete, Arbeitsradführung 5 angeordnet, die in einer Quer, vorzugsweise normal, zur Rotationsachse 1 verlaufenden Führungsrichtung 6 relativ zur Rotationsbasis 2 verschiebbar ist. Die Arbeitsradführung 5 kann beispielsweise über eine oder mehrere Führungen 7 mit der Rotationsbasis 2 verbunden sein. Eine Führung 7 kann als Linearführung ausgeführt sein, wie in Fig. 1 und 2 dargestellt. Eine Linearführung kann als Schlitzführung ausgeführt sein, bei denen Gleitkörper in Führungsschlitzen verschiebbar angeordnet sind. Es können jedoch auch beliebig anders ausgebildete Führungen 7 verwendet werden. Gegebenenfalls kann auch die Länge der Führungen 7 beispielsweise über verstellbare Begrenzungselemente (wie etwa Stellschrauben) verstellt und/oder begrenzt werden, um den möglichen Bewegungsbereich der Arbeitsradführung 5 relativ zur Rotationsbasis 2 zu beschränken. Verwendbare Führungen 7 und entsprechende Begrenzungselemente sind dem Fachmann hinlänglich bekannt und müssen daher hierin nicht näher beschrieben werden. Bei der Auslegung der Führungen 7 ist auf eine ausreichende Bewegungspräzision zu sorgen.

Die Rotationsbasis 2 kann gegebenenfalls mit einer zentralen Ausnehmung 21 versehen sein, in die das Ende des Kabels 4 hineinragen oder durch die das Kabel 4 durchragen kann, sodass der Raumbedarf der rotierenden Teile minimiert werden kann. Die Ausnehmung 21 ist in Fig. 1 lediglich schematisch angedeutet, sie kann auch jedoch deutlich tiefer ausgebildet sein und kann auch durch die Rotationsbasis 2 durchgehend ausgeführt sein. Im letzten Fall ist der Antrieb der Rotationsbasis 2 in geeigneter Weise auszuführen.

An der Arbeitsradführung 5 ist eine Arbeitsradanordnung 10 angeordnet, wobei die Arbeitsradanordnung 10 zumindest ein Walzrad 8 umfasst. In einer vorteilhaften Ausführung umfasst die Arbeitsradanordnung 10 zusätzlich auch ein Schneiderad 9. In einer bevorzugten Ausführung umfasst die Arbeitsradanordnung 10 ein Walzrad 8 und ein Schneiderad 9. Eine solche Ausführung ist in Fig.1 und 2 dargestellt.

Durch diese Ausgestaltung der Vorrichtung bildet sich um die Rotationsachse 1 herum und zwischen den zumindest zwei Stützrollen 3 und dem Walzrad 8, und gegebenenfalls dem Schneiderad 9, ein Klemmbereich 24 aus, der durch das Verschieben der Arbeitsradführung 5 in Führungsrichtung 6 relativ zur Rotationsbasis 2 je nach Verschieberichtung vergrößerbar und verkleinerbar ist. In diesem Klemmbereich 24 wird das abzuisolierende Kabel 4 angeordnet und in Verwendung der Vorrichtung zwischen den zumindest zwei Stützrollen 3 und dem Walzrad 8, und gegebenenfalls dem Schneiderad 9, geklemmt. Durch die Rotation der Rotationsbasis 2 rotiert die Stützrollenanordnung 20 mit den Stützrollen 3 und die Arbeitsradführung 5 mit dem Walzrad 8, und gegebenenfalls dem Schneiderad 9, um den Klemmbereich 24 herum. Ist im Klemmbereich 24 ein Kabel 4 angeordnet und geklemmt, rollen die Stützrollen 3 und das Walzrad 8, und gegebenenfalls das Schneiderad 9, am äußeren Mantel des Kabels 4 ab. Das Kabel 4 rotiert dabei nicht mit.

Walzrad 8 und Schneiderad 9 (falls vorhanden) sind drehbar gelagert an der Arbeitsradführung 5 angeordnet und weisen dazu eine vorzugsweise parallel zur Rotationsachse 1 angeordnete Walzradachse 8' und Schneideradachse 9' auf. Bezogen auf die Rotationsachse 1 (und die darüber definierte Position des Kabels 4 in der Vorrichtung) ist die Arbeitsradanordnung 10 in Führungsrichtung 6 an der den Stützrollen 3 gegenüberliegenden Seite angeordnet, sodass das an den Stützrollen 3 aufliegende Kabel 4 durch ein Verschieben der Arbeitsradanordnung 10 in Führungsrichtung 6 zwischen den Stützrollen 3 und der Arbeitsradanordnung 10 einklemmbar ist. In der Ausführung nach Fig.1 wird das Kabel 4 zwischen den Stützrollen 3 und dem Walzrad 8 und dem Schneiderad 9 der Arbeitsradanordnung 10 eingeklemmt. Wenn nun die Rotationsbasis 2 um die Rotationsachse 1 rotiert, rollen die Stützrollen 3, das Walzrad 8 und das Schneiderad 9 (falls vorhanden) am Mantel des Kabels 4, d.h. an dessen Schutzmantel 14, entlang eines Schnittbereichs 15 in Umfangsrichtung ab.

Es ist zu beachten, dass der Schnittbereich 15 keine Schnittlinie sein muss, sondern allgemein einen sich in axialer Richtung des Kabels 4 erstreckenden Bereich kennzeichnet, in dem der Schutzmantel 14 des Kabels durchtrennt werden soll. Wie in weitere Folge erläutert wird, erstreckt sich die Wirkung des Walzrades 8 auf das Kabel 4 auch über den Bereich des direkten Kontakt zwischen Walzrad 8 und Schutzmantel 14 in axialer Richtung seitlich hinaus, sodass Walzrad 8 und Schneiderad 9 auch in axialer Richtung seitlich leicht versetzt zueinander angeordnet werden können (wie in Fig.2 dargestellt). Der axiale Bereich, der von der Wirkung des Walzrades 8 betroffen ist, wird im Zusammenhang mit der gegenständlichen Erfindung als Schnittbereich 15 bezeichnet.

Das Kabel 4 kann auch in einer fixen (d.h. nicht mit den rotierenden Teilen der Vorrichtung mitrotierenden) Klemmvorrichtung 22 gesichert sein, die in Fig. 2 lediglich schematisch angedeutet ist. Die Klemmvorrichtung 22 kann sehr nahe an der Arbeitsradführung 5 angeordnet sein, und das Kabel 4 in seine runde Querschnittsform pressen und während der Bearbeitung darin festhalten. Dies ist insbesondere bei weicheren Kabeln 4 vorteilhaft. Gegebenenfalls kann auch das freie Ende des Kabels 4 mit einer entsprechenden inneren Klemmvorrichtung 22' gehalten werden (diese ist in Fig. 2 ebenfalls schematisch angedeutet), wobei die innere Klemmvorrichtung 22' beispielsweise mittels eines Kugellagers (nicht dargestellt) an der Rotationsbasis 2 montiert sein kann. Somit kann die innere Klemmvorrichtung während der Rotation der bewegten Teile stillstehen und das Kabel 4 zentrieren. Die innere Klemmvorrichtung 22' kann dann beispielsweise auch verwendet werden, um den abgetrennten Teil des Schutzmantels 44 nach der Bearbeitung vom Kabel 4 abzuziehen.

An dem der Arbeitsradanordnung 10 in Bezug auf die Rotationsachse 1 in Führungsrichtung 6 gegenüberliegenden Ende der Arbeitsradführung 5 ist in der Ausführung nach Fig.1 und 2 ein Gewicht 16 vorgesehen, welches der Arbeitsradführung 5 bezogen auf die Rotationsachse 1 eine exzentrische Gewichtsverteilung verleiht. Die exzentrische Gewichtsverteilung kann auch ohne zusätzliches Gewicht 16 alleine durch die Form der Arbeitsradführung 5 gewährleistet werden.

Wenn die Rotationsbasis 2 mit der daran über die Linearführungen 7 angeordneten Arbeitsradführung 5 um die Rotationsachse 1 rotiert, wirkt aufgrund der exzentrischen Gewichtsverteilung eine Zentrifugalkraft $F_{zf}$ in Führungsrichtung 6 auf die Arbeitsradführung 5, sodass die Arbeitsradführung 5 mit der Arbeitsradanordnung 10 gegen die äußere Oberfläche des Kabels 4 (bzw. gegen die von den Stützrollen 3 aufgebrachte Gegenkraft) gedrückt wird. Die Andruckkraft der Arbeitsanordnung 10 gegen das Kabel 4 kann somit konstruktiv über die Auslegung der Gewichtsverteilung der Arbeitsradführung 5, beispielsweise mittels Gewichts 16, und verfahrensmäßig über die Rotationsgeschwindigkeit geregelt werden. Gegebenenfalls kann das Gewicht 16 austauschbar oder veränderbar ausgebildet sein, um die Andruckkraft zu variieren. Die Arbeitsradführung 5 kann gegebenenfalls über Spannmittel, wie etwa Federn, in die "geöffnete" Stellung, in der die Stützrollen 3 und die Arbeitsradanordnung 10 am weitesten voneinander entfernt sind, vorgespannt sein, wobei dann die Arbeitsradanordnung 10 erst mit dem Schutzmantel 14 des Kabels 4 in Kontakt gelangt, wenn die Rotationsbasis 2 der Vorrichtung ausreichend schnell rotiert und die Arbeitsradführung 5 durch die Zentrifugalkraft $F_{zf}$ ausreichend stark entgegen der vom Spannmittel aufgebrachten Kraft wirkt. Alternativ oder zusätzlich dazu kann der Antrieb der rotierenden Teile so geregelt werden, dass das Gewicht 16 im Stillstand oben angeordnet ist, sodass die Arbeitsradanordnung 10 automatisch durch das Eigengewicht nach unten (d.h. in die geöffnete Position) gedrückt wird.

Die Andruckkraft kann aber auch durch entsprechende Stellmittel, wie eine Feder oder einen Stallantrieb, aufgebracht werden. In diesem Fall ist auch keine exzentrische Gewichtsverteilung der Arbeitsradführung 5 erforderlich. Auch eine Kombination eines Stellantriebs und der Wirkung einer Zentrifugalkraft $F_{zf}$ ist denkbar.

Als "Vorderseite" wird im Zusammenhang mit der gegenständlichen Offenbarung die Seite der Vorrichtung bezeichnet, an der das abzuisolierende Kabel 4 anzuordnen ist, d.h. die in Fig. 1 dargestellte Seite bzw. in Fig.2 die rechte Seite. Der Begriff dient lediglich dem Verständnis und der Orientierung und ist nicht einschränkend auszulegen. Insbesondere wäre es auch möglich, die Anordnung von Rotationsbasis 2 und Arbeitsradführung 5 "umzukehren", sodass die Arbeitsradführung 5 mit den daran angeordneten Elementen gegenüber der Vorderseite, also "hinter" der Rotationsbasis 2 angeordnet ist, wobei das Kabel 4 dann durch eine in der Rotationsbasis 2 vorgesehene zentrale Öffnung durchgesteckt werden würde, um mit der Arbeitsradanordnung 10 und Stützrollenanordnung 20 in Kontakt zu kommen. Gegebenenfalls kann die Arbeitsradanordnung 10 in axialer Richtung auch zwischen Rotationsbasis 2 und Arbeitsradführung 5 angeordnet sein, oder sie kann in einem Innenraum der Arbeitsradführung 5 geschützt angeordnet sein. Die Umsetzung der konstruktiven Änderungen, die für solche alternative Ausführungsformen erforderlich sind, liegt im Können eines Durchschnittsfachmanns.

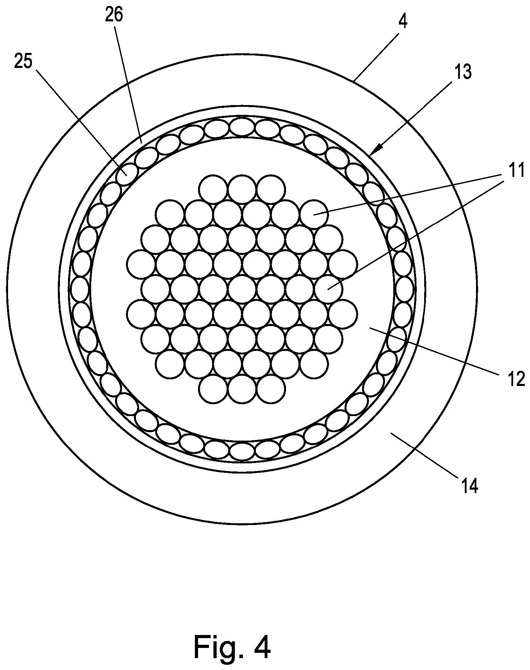

Das Kabel 4 besteht, wie in Fig.4 dargestellt, im Wesentlichen aus einem Leiter 11 oder mehreren Leitern 11, die in einer den Kern des Kabels 4 ausbildenden Leitungsanordnung 12 angeordnet sind. Die einzelnen Leiter 11 können gegeneinander bzw. nach außen hin elektrisch isoliert sein, wobei je nach Kabeltyp weitere Schichten vorgesehen sein können, beispielsweise um einzelne Leiterbündel in der Leitungsanordnung 12 voneinander abzugrenzen. Um die Leitungsanordnung 12 herum ist eine Abschirmlage 13 vorgesehen, beispielsweise eine dünne Metallfolie, etwa aus Aluminium oder Kupfer, oder ein filigranes Schirmgeflecht 25 aus Metalldraht. Gegebenenfalls kann die Abschirmlage 13 auch aus mehreren solchen Lagen bestehen. Derartige Abschirmlagen 13 sind im Fachbereich in unterschiedlichsten Ausführungsformen hinlänglich bekannt und müssen daher hierin nicht detaillierter beschrieben werden. Da die Abschirmlage 13 meist aus vergleichsweise teuren Material(ien) besteht, sind die Hersteller bestrebt, diese Lage so dünn wie möglich auszuführen. Daher ist die Abschirmlage 13 meist sehr empfindlich, insbesondere gegen mechanische Belastungen. Als äußerste Schicht des Kabels 4 ist um die Abschirmlage 13 der Schutzmantel 14 angeordnet, der die Einheit aus Leitungsanordnung 12 und Abschirmlage 13 gegen äußere Einflüsse schützt und als elektrische Isolation des Kabels 4 dient.

Die Abschirmlage 13 kann auch eine Schirmfolie 26 umfassen, die ein Schirmgeflecht 25 oder eine Metallfolie (oder auch beides) umgibt. Die Schirmfolie 26 ist üblicherweise als Kunststofffolie ausgeführt, üblicherweise als metallbeschichtete (entweder durch Aufdampfen einer Metallschicht auf die Kunststofffolie oder durch Kaschieren einer Metallfolie mit einer Kunststofffolie) Kunststofffolie ausgeführt.

Zum Abisolieren des Kabels 4 ist der Schutzmantel 14 entlang eines axialen Bereichs des Kabels 4, üblicherweise im Bereich des axialen freien Endes des Kabels 4, zu entfernen. Wenn die Abschirmlage 13 auch eine Schirmfolie 26 umfasst, dann ist dabei auch die Schirmfolie 26 zu entfernen, um das Schirmgeflecht 25 oder die Metallfolie (oder auch beides) in diesem Bereich zur elektrischen Kontaktierung freizulegen. Das Schirmgeflecht 25 oder die Metallfolie (oder auch beides) sollen dabei nicht zu stark verformt oder gar beschädigt werden.

Das Walzrad 8 und das Schneiderad 9 weisen in einer Ebene parallel zu ihrer Rotationsachse 8', 9' jeweils einen unterschiedlichen Querschnitt auf, wie in Fig.3 schraffiert angedeutet. Insbesondere bildet das Schneiderad 9 eine radial umlaufend, radial außen liegende Schneidkante 17 aus, während das Walzrad 8 radial außen eine stumpfere Randgeometrie als das Schneiderad 9 aufweist, die im Zusammenhang mit der gegenständlichen Offenbarung als Walzkontur 18 bezeichnet wird. Die Walzkontur 18 des Walzrades 8 ist dabei so auf die Materialparameter der zu schneidenden Schutzmäntel 14 und auf die eingestellten bzw. einstellbaren Andruckkräfte ausgelegt, dass das Walzrad 8 nicht schneidend in das Material des Schutzmantels 14 eindringt, sondern das Material lediglich presst und ein wenig verdrängt. Im Unterschied dazu wird im Zusammenhang mit der gegenständlichen Erfindung als "Schneidekante" eine Kontur angesehen, die unter diesen Bedingungen in das Material des Schutzmantels 14 schneidend eindringt. Das Schneiderad 9 läuft daher am radialen Ende spitz zur Schneidkante 17 zusammen, während das Walzrad 8 am radialen Ende als Walzkontur 18 eine axiale Breite aufweist, die auf die Materialparameter des Schutzmantels 14 abgestimmt ist.

Durch die Dauerbelastung des vom um das Kabel 4 rotierenden Walzrad 8 ausgeführten "Walzens" des Schutzmantels 14 mit der Walzkontur 18 wird das Material des Schutzmantels 14 im Schnittbereich 15 qualitativ beeinträchtigt und "mürbe" gemacht. Dadurch dringt das Walzrad 8 in den Schutzmantel 14 durch das Verdrängen des Materials des Schutzmantels 14 radial ein. Wenn zusätzlich ein Schneiderad 9 vorgesehen ist, kann der Schutzmantel 14 aufgrund dieses "Walzens" vom Schneiderad 9 auch leicht durchtrennt werden, was das Abisolieren unterstützt. Der Schutzmantel 14 kann aber auch alleine vom Walzrad 8 durchtrennt werden.

Da die Abschirmlage 13 jedoch aus einem anderen Material (i.A. Metall) besteht, als der Schutzmantel 14 (i.A. Kunststoff) bewirkt der Druck der abrollenden Walzkontur 18 auf der Abschirmlage 13 nur eine geringere Verformung, als dies beim Material des Schutzmantels 14 der Fall ist. Sobald die Walzkontur 18 somit in den Bereich der Abschirmlage 13 gelangt, drückt sich das Walzrad 8 weniger tief ein. Idealerweise wird die weitere Bewegung der Arbeitsradführung 5 mit dem Walzrad 8 in Führungsrichtung 6 gestoppt, wenn die Walzkontur 18 die Abschirmlage 13 erreicht. Das kann durch geeignete Auslegung der Rotationsgeschwindigkeit der Rotationsbasis 2 und/oder der exzentrischen Gewichtsverteilung der Arbeitsradführung 5 erreicht werden.

Wenn die Arbeitsradanordnung 10 ein Schneiderad 9 umfasst, dann ist es vorteilhaft, wenn das Schneiderad 9, dass sich ja als Teil der Arbeitsradanordnung 10 mit dem Walzrad 8 mitbewegt, nicht mit der Abschirmlage 13 in Kontakt kommt. Die Abschirmlage 13 kann daher vom Schneiderad 8 nicht angeschnitten und dadurch beschädigt werden.

Zu diesem Zweck kann vorgesehen sein, dass der äußere radiale Rand der Walzkontur 18 ein wenig näher an der Rotationsachse 1 angeordnet, als der äußere radiale Rand der Schneidkante 17. Das ist in Fig. 3 dargestellt. Die Differenz der (größeren) Entfernung D zwischen der Schneidekante 17 und der Rotationsachse 1 zur (kleineren) Entfernung d zwischen der Walzkontur 18 und der Rotationsachse 1 ist dabei sehr gering und kann beispielsweise zwischen 5 % und 50 %, vorzugsweise zwischen 10 und 20 % der Schichtdicke des zu durchtrennenden Schutzmantels 14 betragen. Beispielsweise kann die Differenz (D-d) zwischen etwa 50 $\mu$m und 200 $\mu$m, insbesondere etwa 100 $\mu$m betragen.

Die Differenz (D-d) kann auf unterschiedliche Weisen konstruktiv hergestellt werden. In einer sehr einfach herzustellenden Ausführungsform können beispielsweise das Walzrad 8 und das Schneiderad 9 jeweils unterschiedliche Außenradien aufweisen, wobei der Außenradius R des Walzrades 8 größer ist, als der Außenradius r des Schneiderads 9, wie in Fig.3 dargestellt. Dadurch ist es möglich, die Rotationsachsen 8', 9' des Walzrades 8 und des Schneiderades 9 in jeweils derselben radialen Entfernung zur Rotationsachse 1 anzuordnen, was konstruktiv vorteilhaft ist. In einer anderen möglichen Ausführung können die Rotationsachsen 8', 9' des Walzrades 8 und des Schneiderades 9 auf unterschiedlichen Durchmessern liegen. In diesem Fall können die Außenradien r, R auch gleich sein.

Mögliche Radien, Entfernungen und Konturen sind in Fig. 3 schematisch und übersichtlich dargestellt. Das koaxial an der Rotationsachse 1 angeordnete Kabel 4 wird zwischen den beiden Stützrollen 3 und der aufgrund der wirkenden Andruckkraft, beispielsweise aufgrund der Zentrifugalkraft $F_{zf}$, gegen die Stützrollen 3 drückenden Arbeitsradanordnung 10 aus Walzrad 8 und Schneiderad 9 in Position gehalten, während die Rollen bzw. Räder aufgrund der Rotation der Rotationsbasis 2

um das Kabel 4 herum rotieren. Dabei walzt und verdrängt das Walzrad 8 das Material des Schutzmantels 14 und führt so sehr schnell zu einer gezielten Materialermüdung, sodass das Material an dieser Stelle vom "nachfolgenden" Schneiderad 9 geschnitten werden kann. Das Walzrad 8 dringt dann radial in diesen Schnitt ein und verdrängt und zermürbt das Material noch mehr.

Sobald das Walzrad 8 das Material der Abschirmlage 13 erreicht hat, wird ein weiteres Verdrängen und Eindringen in das Material aufgrund der höheren Festigkeit von Abschirmlage 13 und Leitungsanordnung 12 verhindert, und das Walzrad 8 rollt auf der Oberfläche der Abschirmlage 13 ab ohne weiter in das Kabel 4 einzudringen und verhindert, dass die Abschirmlage 13 mit dem Schneiderad 9 in Kontakt gelangt. Diese Lage ist in Fig. 3 durch die strichlierte Umrisslinie von Walzrad 8 und Schneiderad 9 dargestellt. Es ist stark übertrieben dargestellt, dass das Schneiderad 9 die Abschirmlage 13 nicht berührt. Der Antrieb der Vorrichtung kann dann abgestellt, das Kabel 4 entnommen und der abgetrennte Teil des Schutzmantels 14 abgezogen werden.

Die Auslegung der Walzkontur 18, insbesondere die axiale Breite und die Geometrie am radialen Ende des Walzrades 8, ist entweder bekannt oder kann einfach durch entsprechende Versuche mit abzuisolierenden Kabeln 4 durchgeführt werden.

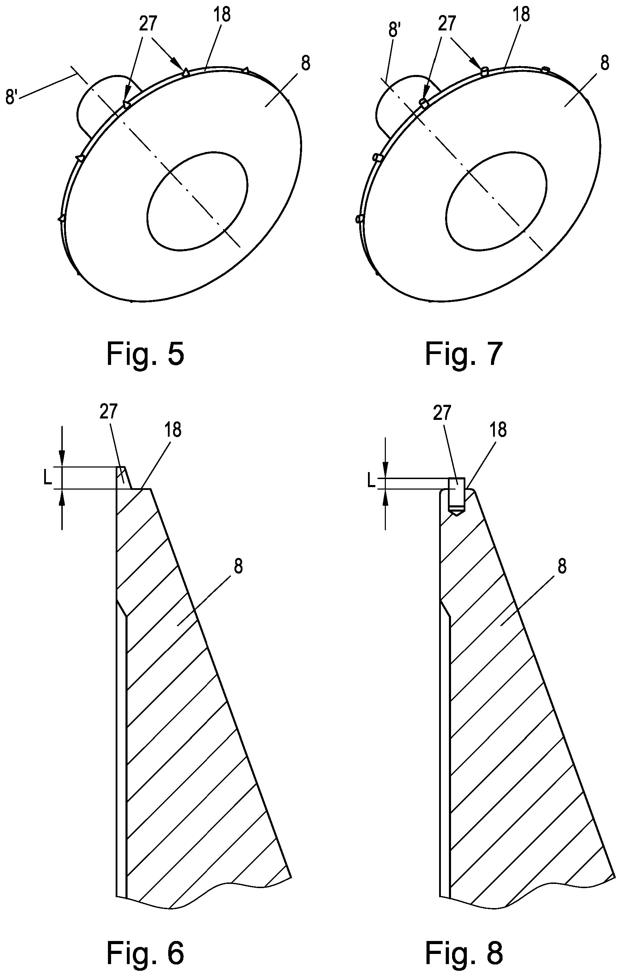

Insbesondere bei Kabeln 4 mit einer Schirmfolie 26 in der Abschirmlage 13 kann eine hohe Andruckkraft des Walzrades 8 auf das Kabel 4 notwendig sein, um ein Durchtrennen der Schirmfolie 26 zu bewirken, Dabei müsste beispielsweise das Walzrad 8 soweit in das Kabel 4 eindringen können, bis die Schirmfolie 26 von einem Schneiderad 9 durchtrennt wird. Das könnten aber mit einer größeren Verformung oder gar Beschädigung der anderen Teile der Abschirmlage 13, insbesondere eines Schirmgeflechts 25 einhergehen, was zu vermeiden ist. Um hier Abhilfe zu schaffen sind an der Walzkontur 18 des Walzrades 8 über den Umfang des Walzrades 8 verteilt Perforationselemente 27 vorgesehen, die eine vorgegebene radiale Länge L radial von der radial äußeren Walzkontur 18 des Walzrades 8 abstehen. Das ist anhand von vorteilhaften Ausgestaltungen in den Fig.5-8 dargestellt.

In Fig.5 und 6 ist eine Ausführung eines Walzrades 8 mit Perforationselementen 27 dargestellt, wobei die Perforationselemente 27 integraler Teil des Walzrades 8 sind, d.h. einteilig mit dem Walzrad 8 ausgebildet sind. Hierzu kann das Walzrad 8 beispielsweise aus Kunststoff (wie PEEK (Polyetheretherketon) oder ein gefüllter oder faserverstärkter Kunststoff) spritzgegossen sein und dann nachgearbeitet sein, insbesondere um die gewünschte Länge L sicherzustellen. Das Walzrad 8 kann aber auch aus Metall (Stahl oder rostfreier Stahl) gefertigt sein und die Perforationselemente 27 können mittels eines spanenden Fertigungsverfahrens herausgearbeitet sein. Auch andere bekannte Fertigungsverfahren zur Herstellung der Perforationselemente 27, wie beispielsweise ein Drahterosionsverfahren oder Funkenerosionsverfahren, sind hierbei denkbar.

In der Ausführung nach Fig.7 und 8 ist das Walzrad 8 aus Kunststoff (wie PEEK (Polyetheretherketon) oder ein gefüllter oder faserverstärkter Kunststoff) oder Metall (Stahl oder rostfreier Stahl) gefertigt, wobei in die Walzkontur 18 Nadeln als Perforationselemente 27 eingesetzt sind. Die Nadeln sind dabei beispielsweise aus Stahl oder rostfreiem Stahl gefertigt. Die Nadeln können einen Durchmesser von 0,1mm bis 0,5mm aufweisen. Um eine präzise Länge L der Perforationselemente 27 zu erzielen, können die eingesetzten Nadeln nach dem Einsetzen auf die gewünschte Länge L geschliffen werden.

Die Form der abstehenden Perforationselemente 27 kann spitz zusammenlaufend sein, beispielsweise kegelförmig oder pyramidenförmig, kann aber auch prismenförmig oder zylinderförmig sein.

Die Länge L mit der die Perforationselemente 27 radial von der Walzkontur 18 abstehen beträgt vorzugsweise zwischen 0,02mm und 0,5mm. Damit kann erreicht werden, dass die Perforationselemente 27 zwar eine Schirmfolie 26, typischerweise mit Dicken von 10 bis 100$\mu$m, perforieren, aber andere darunterliegende Teile der Abschirmlage 13, insbesondere ein Schirmgeflecht 25, nicht beschädigen. Für das Perforieren sind auch keine großen radialen Andruckkräfte erforderlich, was die Gefahr von unerwünschten Verformungen und Beschädigungen eines Schirmgeflecht 25 oder anderen Teilen der Abschirmlage 13 deutlich senkt oder gänzlich verhindert. Ist keine Schirmfolie 26 vorhanden, dringen die Perforationsspitzen 27 in ein Schirmgeflecht 25 ein, ohne diese maßgebend oder nachteilig zu verformen.

Durch ein Walzrad 8 mit Perforationselementen 27 kann einerseits der Schutzmantel 14 wie oben beschrieben einfach und sicher durchtrennt werden. Erreicht das Walzrad 8 die Abschirmlage 13, wird eine allfällig vorhanden Schirmfolie 26 mit wenigen Umdrehungen des Walzrades 8 über den gesamten Umfang des Kabels 4 perforiert. Danach kann der abgetrennte Schutzmantel 14 mit der Schirmfolie 26 einfach entfernt werden, wobei die Schirmfolie 26 an der Perforation sauber abreißt. Das Abisolieren kann auf diese Weise mit geringeren Andruckkräften und Eindringtiefen der Walzkontur 18 in das Kabel 4 erzielt werden, wodurch Verformungen von empfindlichen Teilen der Abschirmlage 13, wie ein Schirmgeflecht 25, vermieden werden können.

Der Abstand in Umfangsrichtung zwischen zwei benachbarten Perforationselementen 27 auf dem Walzrad 8 (Perforationsinkrement P) wird vorzugsweise so gewählt, dass beim mehrmalige Umrunden des Kabels 4 beim Abisolieren durch die erzeugten Perforation der Schirmfolie 26 keine zu großen Lücken zwischen Perforationen 30 oder zu eng aneinander liegende Perforationen 30 (Anhäufungen von Perforationen) entstehen. Beides kann zu einem unsauberen Trennen der Schirmfolie 26 führen, was zu einer Fähnchenbildung und zu einer ausgefransten Trennstelle führen kann. Das kann die Qualität des abisolierten Kabels 4 und dessen Weiterverwendung beeinträchtigen.

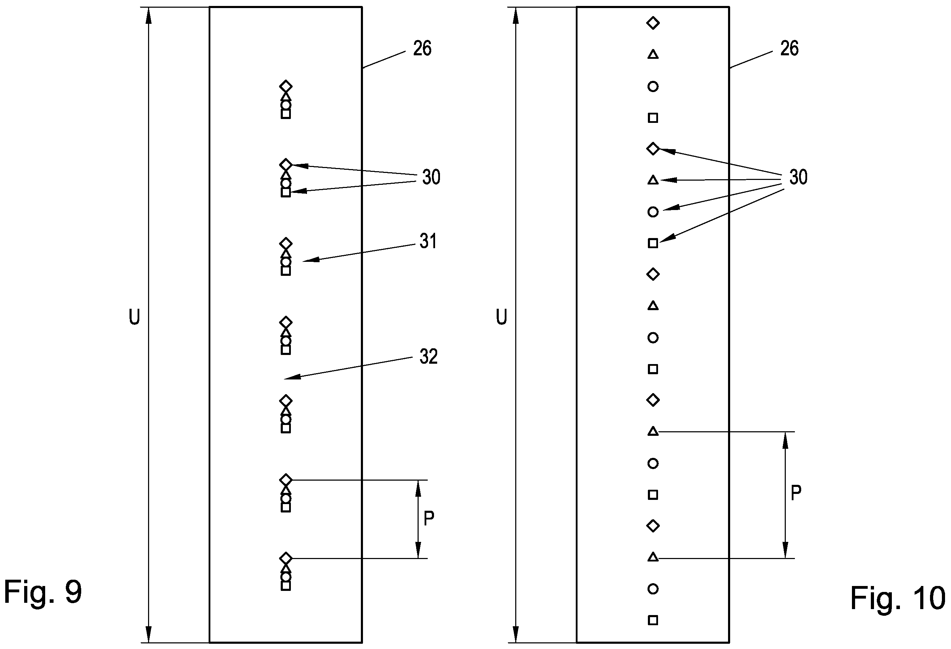

In Fig.9 ist beispielsweise eine Anhäufung von durch die Perforationselemente 27 hergestellten Perforationen 30 auf einer Schirmfolie 26 (die hier zur Veranschaulichung abgewickelt dargestellt ist) führen. Man erkennt über die Umfangslänge U der Schirmfolie 26 verteilt eine Anhäufung 31 von Perforationen 30 und größere Lücken 32 zwischen Perforationen 30. Die Perforationen 30 sind in Fig.9 zum besseren Verständnis mit unterschiedlichen geometrischen Figuren dargestellt, wobei jede geometrische Figur einer Umrundung des Kabels 4 mit dem Walzrad 8 entspricht. Diese Anhäufungen 31 und Lücken 32 entstehen durch ein ungünstig gewähltes Perforationsinkrement P auf dem Walzrad 8. Als Perforationsinkrement P wird die Bogenlänge zwischen zwei benachbarten Perforationselementen 27 auf dem Walzrad 8 verstanden.

Um solche Anhäufungen 31 oder Lücken 32 zu vermeiden wird das Perforationsinkrement P im Bereich

$$\left[\frac{U}{n}, \frac{U}{n+1}\right]$$ gewählt, wobei n eine natürlich Zahl ist. U bezeichnet darin die Umfangslänge auf dem Radius um die Rotationsachse 1 im Bereich des Kabels 4, auf dem die Perforationen 30 erzeugt werden sollen. Üblicherweise ist das der Radius, auf dem die Schirmfolie 26 liegt, die perforiert werden soll. n wird dabei vorteilhaft so gewählt, dass bei der zu erwartenden Anzahl der Umrundungen des Kabels 4 mit dem Walzrad 8 zur Perforierung der Abstand zwischen benachbarten Perforationen 30 in Umfangsrichtung nicht kleiner als 1 bis 3 mm wird, weil auch ein zu kleiner Perforationsinkrement P zu einer unsauberen Trennung führen kann. Für übliche Kabel 4 liegt die natürlich Zahl n zwischen 2 und 15, vorzugsweise zwischen 2 und 10. Wird das Perforationsinkrement P ungefähr in der Mitte dieses Bereichs gewählt, ergibt sich ein durchgängigen Einsatzbereich des Walzrades 8 für unterschiedliche Kabeldurchmesser in einem bestimmten Durchmesserbereich, wobei Anhäufungen 31 und/oder Lücken 32 vermieden werden können.

Ein angestrebtes Perforationsmuster mit Perforationen 30 auf einer Schirmfolie 26 ohne solcher Anhäufungen 31 und/oder Lücken 32 ist in Fig.10 zum Vergleich dargestellt.

Es können aber selbstverständlich auch verschiedene Walzräder 8 für verschiedene Kabel 4, oder auch für verschiedene Kabeldurchmesserbereiche, verwendet werden, wobei das Perforationsinkrement P der Perforationselemente 27 des Walzrades 8 auf das jeweilige Kabel 4 angepasst sind.

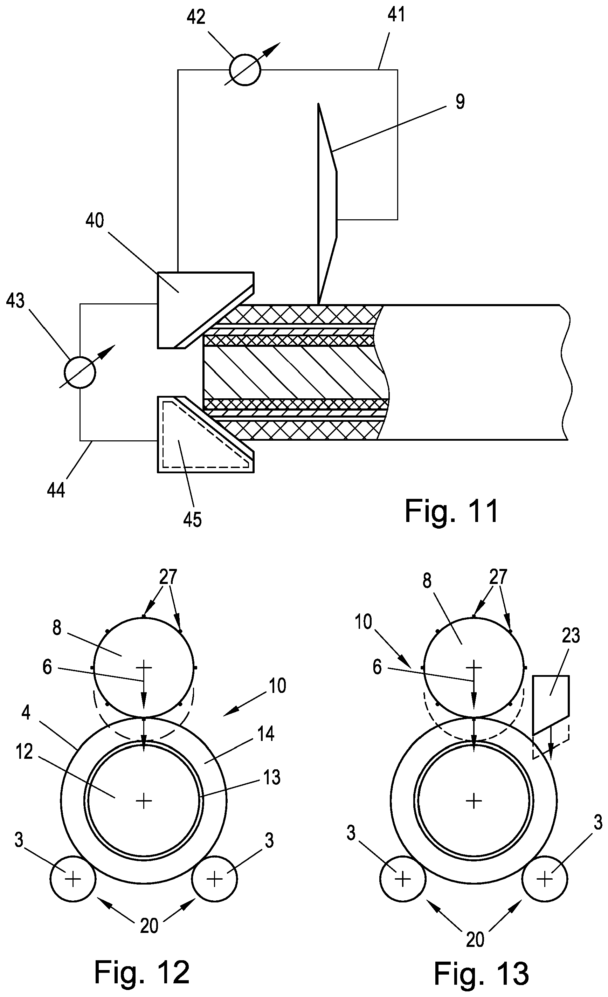

Zur Qualitätsüberwachung des Abisoliervorganges kann auch eine elektrische Durchgangsprüfung verwendet werden, wie anhand von Fig.11 erläutert wird. In Fig.11 ist nur das Kabel 4 dargestellt, aber nicht die anderen Teile der Vorrichtung, beispielsweise wie in Fig.1 und 2 dargestellt. Zur Durchgangprüfung wird ein Schirmgeflecht 25 des Kabels 4 mittels eines Testkontakts 40 elektrisch kontaktiert. Der Testkontakt 40 kann als elektrisch leitende Klinge oder Bürste ausgeführt sein und kontaktiert das Schirmgeflecht 25 im Bereich des axialen Endes des Kabels 4. Der Testkontakt 40 kann aber auch als Platte ausgeführt sein, die axial vom Kabelende beabstandet und im Bereich des Schirmgeflechts 25 angeordnet ist. Der entstehende Luftspalt zwischen Platte und dem Schirmgeflecht 25 kann durch Zuführen von ionisierter Luft überbrückt werden, sodass sich eine hinreichende elektrische Verbindung zwischen Platte und dem Schirmgeflecht 25 ergibt. Der Testkontakt 40 ist über eine Testleitung 41 elektrisch mit dem Schneiderad 9 verbunden. Das Schneiderade 9 muss hierfür elektrisch leitend ausgeführt sein. Über ein Messgerät 42 kann dann eine elektrische Verbindung zwischen dem Testkontakt 40 und dem Schneiderad 9 festgestellt werden, beispielsweise indem eine Testspannung angelegt wird und ein Strom gemessen wird. Im Falle einer festgestellten elektrischen Verbindung hätte das Schneiderad 9 in unerwünschter Weise das Schirmgeflecht 25 berührt, was auf diese Weise erkannt wird und ermöglicht, die weitere Verwendung des Kabels zu verhindern.

Es kann auch ein zweiter Testkontakt 45 (in Fig.11 strichliert) vorgesehen sein, der wie oben beschrieben ebenso das Schirmgeflecht 25 kontaktieren soll. Dieser zweite Testkontakt 45 ist über eine zweite Testleitung 44 mit dem ersten Testkontakt 40 verbunden. Damit kann über ein zweites Messgerät 43 eine elektrische Durchgangsprüfung zwischen erstem Testkontakt 40 und zweitem Testkontakt 45 durchgeführt werden, um sicherzustellen, dass der erste Testkontakt 40 das Schirmgeflecht 25 kontaktiert. Der Ablauf der Prüfung kann dabei so durchgeführt werden, dass zuerst mittels erstem und zweiten Testkontakt 40, 45 und einer Durchgangsprüfung festgestellt wird, ob der ersten Testkontakt 40 das Schirmgeflecht 25 elektrisch kontaktiert und dann mittels dem ersten Testkontakt 40 durchgängig überprüft wird, ob das Schneiderad 9 das Schirmgeflecht 25 berührt.

Mit einer solchen Durchgangsprüfung kann auch erkannt werden, wenn das Walzrad 8 das Schirmgeflecht 25 oder die Schirmfolie 26 erreicht. Wenn das Walzrad 8 elektrisch leitend ausgeführt ist, kann, wie oben ausgeführt mittels Testkontakt am Schirmgeflecht 25 der elektrisch mit dem Walzrad 8 verbunden ist, festgestellt werden, dass die Perforationselemente 27 des Walzrades 8 in das Schirmgeflecht 25 eindringen. Wird das festgestellt, kann der Abisolationsvorgang des Kabels 4 gestoppt werden. Ist dabei im Kabel 4 auch eine Schirmfolie 26 vorhanden, ist damit gleichzeitig sichergestellt, dass die Schirmfolie 26 durch die Perforationselemente 27 in gewünschter Weise auch perforiert wurde.

Durch die einfache und stabile Konstruktion kann die erfindungsgemäße Vorrichtung mit hohen Geschwindigkeiten betrieben werden, beispielsweise zwischen 100 U/min und 5000 U/min. Der Vorgang des Abisolierens eines Kabels 4 kann dadurch sehr schnell erfolgen, wobei nur wenige Sekunden für einen Abisoliervorgang erforderlich sind. Es ist auch nicht erforderlich, das Durchtrennen des Schutzmantels 14 mit komplexen und fehleranfälligen Vorrichtungen zu messen, da bei der erfindungsgemäßen Vorrichtung ein Durchtrennen der gewünschten Teile der Abschirmlage 13 ohnehin ausgeschlossen ist.

In Fig. 3 sind Walzrad 8 und Schneiderad 9 aus Gründen der Darstellbarkeit relativ weit voneinander beabstandet dargestellt. Um das Kabel 4 sicher zwischen der Arbeitsradanordnung 10 und den Stützrollen 3 einzuklemmen ist es jedoch bevorzugt, Walzrad 8 und Schneiderad 9 nahe aneinander anzuordnen, wobei die Umfangskonturen der beiden Räder sich gegebenenfalls auch überlappen können, sofern die Radprofile dies zulassen. Radprofile von Walzrad 8 und Schneiderad 9, die ein Überlappen zulassen, sind beispielsweise in Fig. 2 dargestellt. Diese Anordnung nutzt die Eigenschaft des Walzrades 8, das das Material des Schutzmantels 14 nicht nur in direktem Kontakt, sondern auch in einem gewissen Bereich seitlich dieses Kontakts verformt und zermürbt.

In der Ausgestaltung nach Fig. 12 weist die Arbeitsradanordnung 10 nur ein Walzrad 8 mit den Perforationselementen 27 auf, welches gegen den Schutzmantel 14 drückend am Kabel 4 abrollt und dabei das Mantelmaterial so lange ermüdet, bis es einem Eindringen des Walzrades 8 keinen ausreichenden Widerstand mehr entgegensetzen kann. Das Walzrad 8 dringt dadurch immer weiter in das Material des Schutzmantels 14 ein, bis es an der Abschirmlage 13 angelangt ist und die Perforationselemente 27 eine Schirmfolie 26 (so ferne vorhanden) perforieren.

Fig. 13 zeigt eine weitere alternative Ausgestaltung der Arbeitsradanordnung 10. Fig. 13 zeigt, dass in der Arbeitsradanordnung 10 nicht nur Räder verwendet werden können, sondern dass diese auch andere, nicht abrollende Elemente umfassen kann. Insbesondere ist in Fig. 13 ein Walzrad 8 mit Perforationselementen 27 dargestellt, das mit einer "außermittig" angeordneten Schneide 23 kombiniert ist. Die Anordnung der Schneide 23 ist so gewählt, dass diese bei ordnungsgemäßer Funktion der Vorrichtung nicht mit Teilen der Abschirmlage 13 in Berührung kommen kann, die nicht beschädigt werden dürfen. Die Schneide 23 ist hierbei in Verwendung der Vorrichtung ortsfest (aber möglicherweise verstellbar) an der Arbeitsradführung 5 angeordnet. Die Schneide 23 ist so angeordnet, dass bei Bewegung der Arbeitsradführung 5 in Führungsrichtung 6 die Schneide 23 die Abschirmlage 13, oder gewisse Teile davon, nicht berühren kann. Aufgrund der bekannten Geometrie des Kabels 4 lässt sich das einfach bewerkstelligen. Die Schneide 23 unterstützt das Durchtrennen des Schutzmantels 14 mit dem Walzrad 8.

**Patentansprüche**

1. Vorrichtung zum Abisolieren eines Kabels (4) mit einem äußeren Schutzmantel (14), wobei die Vorrichtung eine Stützrollenanordnung (20) und eine Arbeitsradanordnung (10) aufweist, wobei die Stützrollenanordnung (20) an einer um eine Rotationsachse (1) drehbare Rotationsbasis (2) angeordnet ist und die Arbeitsradanordnung (10) an einer Arbeitsradführung (5) angeordnet ist, wobei die Rotationsbasis (2) und die Arbeitsradführung (5) über zumindest eine Führung (7) miteinander verbunden sind und die Arbeitsradführung (5) in einer Quer zur Rotationsachse (1) verlaufenden Führungsrichtung (6) relativ zur Rotationsbasis (2) verschiebbar ist, wobei die Stützrollenanordnung (20) zumindest zwei jeweils um eine Stützrollenachse (3') drehbar an der Rotationsbasis (2) gelagerte Stützrollen (3) umfasst und die Arbeitsradanordnung (10) ein um eine Walzradachse (8') drehbar an der Arbeitsradführung (5) gelagertes Walzrad (8) umfasst und wobei um die Rotationsachse (1) herum und zwischen den zumindest zwei Stützrollen (3) und dem Walzrad (8) ein Klemmbereich (24) ausgebildet ist, der durch das Verschieben der Arbeitsradführung (5) in Führungsrichtung (6) relativ zur Rotationsbasis (2) je nach Verschieberichtung vergrößerbar und verkleinerbar ist, **dadurch gekennzeichnet, dass** am Walzrad (8) an einer radial äußeren Walzkontur (18) über den Umfang verteilt eine Mehrzahl von Perforationselementen (27) angeordnet sind, die radial um eine Länge (L) von der Walzkontur (18) abstehen.

2. Vorrichtung nach Anspruch 1, **dadurch gekennzeichnet, dass** die Arbeitsradanordnung (10) zusätzlich ein um eine Schneideradachse (9') drehbar an der Arbeitsradführung (5) gelagertes Schneiderad (9) mit einer radial außen liegenden Schneidekante (17) umfasst, wobei der Klemmbereich (24) zwischen den zumindest zwei Stützrollen (3), dem Walzrad (8) und dem Schneiderad (9) ausgebildet ist.

3. Vorrichtung nach Anspruch 2, **dadurch gekennzeichnet, dass** die radial äußere Walzkontur (18) des Walzrades (8) eine stumpfere Randgeometrie aufweist als die radial außen liegende Schneidekante (17) des Schneiderades (9).

4. Vorrichtung nach Anspruch 2 oder 3, **dadurch gekennzeichnet, dass** die radial außen liegende Walzkontur (18) des Walzrades (8) näher an der Rotationsachse (1) angeordnet ist, als der radial äußere Rand der Schneidekante (17) des Schneiderades (9).

5. Vorrichtung nach Anspruch 1, **dadurch gekennzeichnet, dass** die Arbeitsradanordnung (10) zusätzlich eine an der Arbeitsradführung (5) angeordnet Schneide (23) umfasst.

6. Vorrichtung nach Anspruch 2 oder 5, **dadurch gekennzeichnet, dass** die Walzkontur (18) einen Schnittbereich (15) definiert und die Schneidekante (17) des Schneiderades (9) oder die Schneide (23) in diesem Schnittbereich (15) angeordnet ist.

7. Vorrichtung nach einem der Ansprüche 1 bis 6, **dadurch gekennzeichnet, dass** die Länge (L) zwischen 0,02mm und 0,5mm beträgt.

8. Vorrichtung nach einem der Ansprüche 1 bis 7, **dadurch gekennzeichnet, dass** zwei in Umfangsrichtung benachbarte Perforationselemente (27) in Umfangsrichtung durch ein Perforationsinkrement (P) voneinander beabstandet angeordnet sind, wobei das Perforationsinkrement (P) in einem Bereich

$$\left[\frac{U}{n}, \frac{U}{n+1}\right]$$

liegt, wobei n eine natürlich Zahl zwischen 2 und 15, vorzugsweise zwischen 2 und 10, ist und U eine Umfangslänge auf einem Radius um die Rotationsachse (1) angibt, an dem die Perforationselemente (27) bei Verwendung der Vorrichtung Perforationen (30) erzeugen.

9. Vorrichtung nach einem der Ansprüche 1 bis 8, **dadurch gekennzeichnet, dass** die Arbeitsradführung (5) bezogen auf die Rotationsachse (1) eine exzentrische Gewichtsverteilung aufweist, wodurch eine Zentrifugalkraft ($F_{zf}$) auf die Arbeitsradführung (5) wirkt, wenn die Rotationsbasis (2) mit der daran über die Führungen (7) angeordneten Arbeitsradführung (5) um die Rotationsachse (1) rotiert.

10. Verwendung der Vorrichtung nach einem der Ansprüche 1 bis 9 zum Abisolieren eines Kabels (4) mit einem äußeren Schutzmantel (14), wobei das Ende des abzuisolierenden Kabels (4) unter Aufbringung einer Andruckkraft im Klemmbereich (24) zwischen dem Walzrad (8) der Arbeitsradanordnung (10) und den zumindest zwei Stützrollen (3) der Stützrollenanordnung (20) eingeklemmt wird, wobei die Einheit aus Arbeitsradanordnung (10) und Stützrollenanordnung (20) durch Rotation der Rotationsbasis (2) um das Kabel (4) herum rotiert und das Walzrad (8) und die zumindest zwei Stützrollen (3) dabei am Kabel (4) abrollen und die Arbeitsradanordnung (10) dabei in Führungsrichtung (6) in Richtung zur Rotationsachse (1) verschoben wird, sodass das Walzrad (8) in einem von der Walzkontur (18) erzeugten Schnittbereich (15) radial in den Schutzmantel (14) des Kabels (4) eindringt und dabei den Schutzmantel (14) des Kabels (4) entlang des Umfangs durchtrennt.

11. Verwendung nach Anspruch 10, **dadurch gekennzeichnet, dass**, wenn die Arbeitsradanordnung (10) zusätzlich ein Schneiderad (9) oder eine Schneide (23) umfasst, zusätzlich das Schneiderad (9) oder die Schneide (23) im Schnittbereich (15) des Walzrades (8) in den Schutzmantel (14) des Kabels (4) eindringt und das Durchtrennen des Schutzmantels (14) unterstützt.

12. Verwendung nach Anspruch 10 oder 11, **dadurch gekennzeichnet, dass** das Walzrad (8) radial in den Schutzmantel (14) des Kabels (4) eindringt bis die Walzkontur (18) eine Abschirmlage (13) im Kabel (4) erreicht.

13. Verwendung nach Anspruch 11, **dadurch gekennzeichnet, dass** die Abschirmlage (13) ein Schirmgeflecht (25) und eine das Schirmgeflecht (25) umgebende Schirmfolie (26) umfasst und das Walzrad (8) in das Kabel (4) radial eindringt bis die Walzkontur (18) die Schirmfolie (26) im Kabel (4) erreicht, wodurch die Schirmfolie (26) durch die Perforationselemente (27) des Walzrades (8) über den Umfang perforiert wird.

14. Verwendung nach Anspruch 13, **dadurch gekennzeichnet, dass** das Schirmgeflecht (25) des abzuisolierenden Kabels (4) mittels eines elektrischen Testkontakts (40) elektrisch kontaktiert wird und der Testkontakt (40) elektrisch mit dem Walzrad (8) verbunden wird und mittels eines Messgeräts (42) und einer elektrischen Durchgangsprüfung geprüft wird, ob das Walzrad (8) während des Abisolierens in Kontakt mit dem Schirmgeflecht (25) gerät und im Falle eines festgestellten Kontakts der Abisoliervorgang beendet wird.

15. Verwendung nach 13, **dadurch gekennzeichnet, dass** das Schirmgeflecht (25) des abzuisolierenden Kabels (4) mittels eines elektrischen Testkontakts (40) elektrisch kontaktiert wird und der Testkontakt (40) elektrisch mit dem Schneiderad (9) oder der Schneide (23) verbunden wird und mittels eines Messgeräts (42) und einer elektrischen Durchgangsprüfung geprüft wird, ob das Schneiderad (9) oder die Schneide (23) während des Abisolierens in Kontakt mit dem Schirmgeflecht (25) gerät.

**Claims**

1. A device for stripping a cable (4) having an outer protective sheath (14), the device having a support roller arrangement (20) and a work wheel arrangement (10), the support roller arrangement (20) being arranged on a rotation base (2) rotatable about an axis of rotation (1) and the work wheel arrangement (10) being arranged on a work wheel guide (5), the rotation base (2) and the work wheel guide (5) being connected to one another via at least one guide (7) and the work wheel guide (5) being displaceable relative to the rotation base (2) in a guide direction (6) running transversely to the axis of rotation (1), wherein the support roller arrangement (20) comprises at least two support rollers (3) each mounted on the rotation base (2) so as to be rotatable about a support roller axis (3') and the work wheel arrangement (10) comprises a rolling wheel (8) mounted on the work wheel guide (5) so as to be rotatable about a rolling wheel axis (8') and wherein a clamping region (24) is formed around the axis of rotation (1) and between the at least two support rollers (3) and the rolling wheel (8), which clamping region can, by displacing the work wheel guide (5) in the guide direction (6) relative to the rotation base (2), be enlarged and reduced depending on the displacement direction, **characterized in that** a plurality of perforation elements (27) are arranged on the rolling wheel (8) on a radially outer rolling contour (18) such that they are distributed over the circumference, which perforation elements protrude radially by a length (L) from the rolling contour (18).

2. The device according to claim 1, **characterized in that** the work wheel arrangement (10) additionally comprises a cutting wheel (9) mounted on the work wheel guide (5) so as to be rotatable about a cutting wheel axis (9') and having a radially outer cutting edge (17), whereas the clamping region (24) is formed between the at least two support rollers (3), the rolling wheel (8) and the cutting wheel (9).

3. The device according to claim 2, **characterized in that** the radially outer rolling contour (18) of the rolling wheel (8) has a blunter edge geometry than the radially outer cutting edge (17) of the cutting wheel (9).

4. The device according to claim 2 or 3, **characterized in that** the radially outer rolling contour (18) of the rolling wheel (8) is arranged closer to the axis of rotation (1) than the radially outer edge of the cutting edge (17) of the cutting wheel (9).

5. The device according to claim 1, **characterized in that** the work wheel arrangement (10) additionally comprises a cutting blade (23) arranged on the work wheel guide (5).

6. The device according to claim 2 or 5, **characterized in that** the rolling contour (18) defines a cutting region (15) and the cutting edge (17) of the cutting wheel (9) or the cutting blade (23) is arranged in said cutting region (15).

7. The device according to any of claims 1 to 6, **characterized in that** the length (L) is between 0.02 mm and 0.5 mm.

8. The device according to any of claims 1 to 7, **characterized in that** two perforation elements (27) adjacent in the circumferential direction are arranged spaced apart from one another in the circumferential direction by a perforation increment (P), the perforation increment (P) being in a range $\left[\dfrac{U}{n}, \dfrac{U}{n+1}\right]$, n being a natural number between 2 and 15, preferably between 2 and 10, and U indicating a circumferential length on a radius about the axis of rotation (1) on which the perforation elements (27) produce perforations (30) when the device is used.

9. The device according to any of claims 1 to 8, **characterized in that** the work wheel guide (5) has an eccentric weight distribution in relation to the axis of rotation (1), as a result of which a centrifugal force ($F_{zf}$) acts on the work wheel guide (5) when the rotation base (2) with the work wheel guide (5) arranged on the rotation base via the guides (7) rotates about the axis of rotation (1).

10. Use of the device according to any of claims 1 to 9 for stripping a cable (4) having an outer protective sheath (14), the end of the cable (4) to be stripped being clamped in the clamping region (24) between the rolling wheel (8) of the work wheel arrangement (10) and the at least two support rollers (3) of the support roller arrangement (20) by applying a pressure force, the unit formed of the work wheel arrangement (10) and the support roller arrangement (20) rotating around the cable (4) by rotation of the rotation base (2) causing the rolling wheel (8) and the at least two support rollers (3) to roll over on the cable (4) and the work wheel arrangement (10) to displace in the guide direction (6) toward the axis of rotation (1), so that the rolling wheel (8) radially penetrates the protective sheath (14) of the cable (4) in a cutting region (15) produced by the rolling contour (18) and severs the protective sheath (14) of the cable (4) along the circumference.

11. The use according to claim 10, **characterized in that,** if the work wheel arrangement (10) additionally comprises a cutting wheel (9) or a cutting blade (23), the cutting wheel (9) or the cutting blade (23) additionally penetrates the protective sheath (14) of the cable (4) in the cutting region (15) of the rolling wheel (8) and supports the severing of the protective sheath (14).

12. The use according to claim 10 or 11, **characterized in that** the rolling wheel (8) radially penetrates the protective sheath (14) of the cable (4) until the rolling contour (18) reaches a shielding layer (13) in the cable (4).

13. The use according to claim 11, **characterized in that** the shielding layer (13) comprises a shielding braid (25) and a shield foil (26) surrounding the shielding braid (25), and the rolling wheel (8) radially penetrates the cable (4) until the rolling contour (18) reaches the shield foil (26) in the cable (4), as a result of which the shield foil (26) is perforated over the circumference thereof by the perforation elements (27) of the rolling wheel (8).

14. The use according to claim 13, **characterized in that** the shielding braid (25) of the cable (4) to be stripped is electrically contacted by means of an electrical test contact (40), and the test contact (40) is electrically connected to the rolling wheel (8), and a measuring device (42) and an electrical continuity check are used to check whether the rolling wheel (8) comes into contact with the shielding braid (25) during stripping and the stripping process is ended in the event that contact is identified.

15. The use according to claim 13, **characterized in that** the shielding braid (25) of the cable (4) to be stripped is electrically contacted by means of an electrical test contact (40), and the test contact (40) is electrically connected to the cutting wheel (9) or the cutting blade (23), and a measuring device (42) and an electrical continuity check are used to check whether the cutting wheel (9) or the cutting blade (23) comes into contact with the shielding braid (25) during stripping.

**Revendications**

1. Dispositif permettant de dénuder un câble (4) comportant une gaine de protection extérieure (14), dans lequel le dispositif présente un agencement de rouleaux de support (20) et un agencement de roues de travail (10), dans lequel l'agencement de rouleaux de support (20) est disposé sur une base rotative (2) pouvant tourner autour d'un axe de rotation (1) et l'agencement de roues de travail (10) est disposé sur un guide de roues de travail (5), dans lequel la base rotative (2) et le guide de roues de travail (5) sont reliés entre eux par l'intermédiaire d'au moins un guide (7) et le guide de roues de travail (5) peut être déplacé par rapport à la base rotative (2) dans une direction de guidage (6) s'étendant transversalement à l'axe de rotation (1), dans lequel l'agencement de rouleaux de support (20) comprend au moins deux rouleaux de support (3) montés sur la base rotative (2) de manière à pouvoir tourner autour de respectivement un axe de rouleau de support (3') et l'agencement de roues de travail (10) comprend une roue de laminage (8) montée sur le guide de roues de travail (5) de manière à pouvoir tourner autour d'un axe de roue de laminage (8') et dans lequel une zone de serrage (24) est réalisée autour de l'axe de rotation (1) et entre les au moins deux rouleaux de support (3) et la roue de laminage (8), laquelle zone de serrage peut être agrandie et réduite selon la direction de déplacement par le déplacement du guide de roues de travail (5) dans la direction de guidage (6) par rapport à la base rotative (2), **caractérisé en ce que** sont disposés sur la roue de laminage (8), sur un contour de laminage (18) radialement extérieur, une pluralité d'éléments de perforation (27) répartis sur la périphérie, lesquels font saillie radialement d'une longueur (L) depuis le contour de laminage (18).

2. Dispositif selon la revendication 1, **caractérisé en ce que** l'agencement de roues de travail (10) comprend en outre une roue de coupe (9) montée sur le guide de roues de travail (5) de manière à pouvoir tourner autour d'un axe de roue de coupe (9') et comportant un bord de coupe (17) situé radialement à l'extérieur, dans lequel la zone de serrage (24) est réalisée entre les au moins deux rouleaux de support (3), la roue de laminage (8) et la roue de coupe (9).

3. Dispositif selon la revendication 2, **caractérisé en ce que** le contour de laminage (18) radialement extérieur de la roue de laminage (8) présente une géométrie d'arête plus émoussée que celle du bord de coupe (17) radialement extérieur de la roue de coupe (9).

4. Dispositif selon la revendication 2 ou 3, **caractérisé en ce que** le contour de laminage (18) radialement extérieur de la roue de laminage (8) est disposé plus près de l'axe de rotation (1) que l'arête radialement extérieure du bord de coupe (17) de la roue de coupe (9).

5. Dispositif selon la revendication 1, **caractérisé en ce que** l'agencement de roues de travail (10) comprend en outre une lame (23) disposée sur le guide de roues de travail (5).

6. Dispositif selon la revendication 2 ou 5, **caractérisé en ce que** le contour de laminage (18) définit une zone de découpe (15) et le bord de coupe (17) de la roue de coupe (9) ou la lame (23) est disposé dans ladite zone de découpe (15).

7. Dispositif selon l'une des revendications 1 à 6, **caractérisé en ce que** la longueur (L) est comprise entre 0,02 mm et 0,5 mm.

8. Dispositif selon l'une des revendications 1 à 7, **ca-**

**ractérisé en ce que** deux éléments de perforation (27) adjacents dans la direction périphérique sont espacés l'un de l'autre dans la direction périphérique par un incrément de perforation (P), dans lequel l'incrément de perforation (P) est situé dans une zone $\left[\dfrac{U}{n}, \dfrac{U}{n+1}\right]$, où n représente un nombre naturel compris entre 2 et 15, de préférence entre 2 et 10, et U indique une longueur périphérique sur un rayon autour de l'axe de rotation (1), sur lequel rayon les éléments de perforation (27) produisent des perforations (30) lors de l'utilisation du dispositif.

9. Dispositif selon l'une des revendications 1 à 8, **caractérisé en ce que** le guide de roues de travail (5) présente une répartition de poids excentrique par rapport à l'axe de rotation (1), moyennant quoi une force centrifuge ($F_{zf}$) agit sur le guide de roues de travail (5) lorsque la base rotative (2) tourne autour de l'axe de rotation (1) avec le guide de roues de travail (5) disposé sur celle-ci par l'intermédiaire des guides (7).

10. Utilisation du dispositif selon l'une des revendications 1 à 9 pour le dénudage d'un câble (4) comportant une gaine de protection extérieure (14), dans laquelle l'extrémité du câble (4) à dénuder est serrée entre la roue de laminage (8) de l'agencement de roues de travail (10) et les au moins deux rouleaux de support (3) de l'agencement de rouleaux de support (20) en appliquant une force de pression dans la zone de serrage (24), dans laquelle l'unité composée de l'agencement de roues de travail (10) et de l'agencement de rouleaux de support (20) tourne autour du câble (4) par rotation de la base rotative (2) et la roue de laminage (8) et les au moins deux rouleaux de support (3) roulent alors sur le câble (4) et l'agencement de roues de travail (10) est alors déplacé dans la direction de guidage (6) en direction de l'axe de rotation (1), de sorte que la roue de laminage (8) pénètre radialement dans la gaine de protection (14) du câble (4) dans une zone de découpe (15) générée par le contour de laminage (18) et sectionne ainsi la gaine de protection (14) du câble (4) le long de la périphérie.

11. Utilisation selon la revendication 10, **caractérisée en ce que,** lorsque l'agencement de roues de travail (10) comprend en outre une roue de coupe (9) ou une lame (23), en outre la roue de coupe (9) ou la lame (23) pénètre dans la gaine de protection (14) du câble (4) dans la zone de découpe (15) de la roue de laminage (8) et aide au sectionnement de la gaine de protection (14).

12. Utilisation selon la revendication 10 ou 11, **caractérisée en ce que** la roue de laminage (8) pénètre radialement dans la gaine de protection (14) du câble (4) jusqu'à ce que le contour de laminage (18) atteigne une couche de blindage (13) dans le câble (4).

13. Utilisation selon la revendication 11, **caractérisée en ce que** la couche de blindage (13) comprend une tresse de blindage (25) et un film de blindage (26) entourant la tresse de blindage (25) et la roue de laminage (8) pénètre radialement dans le câble (4) jusqu'à ce que le contour de laminage (18) atteigne le film de blindage (26) dans le câble (4), moyennant quoi le film de blindage (26) est ainsi perforé sur la périphérie par les éléments de perforation (27) de la roue de laminage (8).

14. Utilisation selon la revendication 13, **caractérisée en ce que** la tresse de blindage (25) du câble (4) à dénuder est mise en contact électrique au moyen d'un contact de test (40) électrique et le contact de test (40) est connecté électriquement à la roue de laminage (8) et on vérifie, au moyen d'un appareil de mesure (42) et d'un moyen électrique de vérification de continuité, si la roue de laminage (8) entre en contact avec la tresse de blindage (25) pendant le dénudage et, en cas de contact constaté, le processus de dénudage est terminé.

15. Utilisation selon la revendication 13, **caractérisée en ce que** la tresse de blindage (25) du câble (4) à dénuder est mise en contact électrique au moyen d'un contact de test (40) électrique et le contact de test (40) est connecté électriquement à la roue de coupe (9) ou à la lame (23) et on vérifie, au moyen d'un appareil de mesure (42) et d'un moyen électrique de vérification de continuité, si la roue de coupe (9) ou la lame (23) entre en contact avec la tresse de blindage (25) pendant le dénudage.

Fig. 2

Fig. 1

Fig. 3

EP 4 181 335 B1

Fig. 4

Fig. 5

Fig. 7

Fig. 6

Fig. 8

Fig. 9

Fig. 10

EP 4 181 335 B1

Fig. 11

Fig. 12

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2158888 A1
- FR 2373131 A
- EP 2693581 A1
- WO 2019243193 A1